(19) **Europäisches Patentamt**
**European Patent Office**
**Office européen des brevets**

(11) **EP 3 518 210 A1**

(12) **EUROPEAN PATENT APPLICATION**
published in accordance with Art. 153(4) EPC

(43) Date of publication:
**31.07.2019 Bulletin 2019/31**

(21) Application number: **16916904.2**

(22) Date of filing: **30.09.2016**

(51) Int Cl.:
**G08G 1/16** *(2006.01)*      **G01S 19/38** *(2010.01)*

(86) International application number:
**PCT/RU2016/000649**

(87) International publication number:
**WO 2018/056859 (29.03.2018 Gazette 2018/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **26.09.2016 RU 2016136211**

(71) Applicant: **Limited Liability Company "Nilar" Moscow 127055 (RU)**

(72) Inventor: **KULIKOV, Roman Sergeevich Moscow 117456 (RU)**

(74) Representative: **Chimini, Francesco Jacobacci & Partners S.p.A. Piazza della Vittoria 11 25122 Brescia (IT)**

(54) **COLLISION AVOIDANCE METHOD BASED ON RELATIVE RADIO NAVIGATION**

(57)    The invention relates to computer engineering. A collision avoidance method based on relative radio navigation includes the following steps: consumer navigation equipment of satellite navigation systems (CNE SNS) is installed on every moving object, said equipment being configured to receive satellite navigation signals in a coherent mode; an estimate of an augmented navigation vector is generated at the output of the CNE SNS; a two-way radio channel is established for transmitting information between moving objects; when moving objects approach one another within the operating distance of the two-way radio channel, the moving objects transmit to one another their augmented navigation vector estimates and augmented navigation vector estimates of adjacent moving objects; on the basis of the received augmented navigation vector estimates, the moving object roughly estimates the position of an adjacent moving object relative to itself and the position of moving objects adjacent thereto; each moving object solves a relative navigation problem and forms a precise estimate of the relative position of the adjacent moving object; each moving object includes a mode for tracking a relative position vector, in which the relative position vector is extrapolated into the future for a time no less than the sum of the time.

EP 3 518 210 A1

**Description**

**FIELD OF THE INVENTION**

The technical solution is related to computation engineering, particularly, to collision avoidance methods based on relative radio navigation, and it may be used in safety systems designed for prevention of movable objects collision, particularly, collision of motor cars, water and air vehicles both man-attended and automatically controlled.

**BACKGROUND**

The task for prevention and avoidance of transport vehicles collision exists since the time of creation and distribution of the vehicles. The solution is extremely actual and demanded, especially with regard to the growth of the number of freely moving mobile objects and increase of travelling speed, as well as the trend for complete automation of the vehicles. This task for prevention of collision is the most actual for dense flows of mobile objects, e.g. motor cars. Assessment of mutual position of mobile objects represents a critical issue.

There are a great number of solutions of the task, every solution has one or another advantages and disadvantages that may be divided into two groups. The first group includes solutions based on all possible sensors that access the distance to the nearest obstacles, e.g. ultrasound, laser, radar-location, computer vision and other sensors. The second group includes solutions based on general-use radio navigation systems, particularly, the systems based on satellite navigation systems GPS/GLONASS/Galileo/Beidou. The stated technical solution is related to the second group.

The most precise mode of operation of satellite navigation systems is the phase measurement mode that measures the position of one receiver relatively to other one at precise accuracy level. Potential error of satellite measurement composes approximately 0.1-0.15 mm (RMS) for static objects and 2-5 mm (RMS) for dynamic objects like motor car or light aircraft. Errors determined in practice compose around 1-5 mm (RMS) and 2-5 cm (RMS), correspondingly.

Such high level accuracy is achieved by the use of so-called first, second and third differences of phase thus excluding errors connected with desynchronization of time scales, as well as those conditioned to atmosphere or troposphere influence. Errors connected with receiver thermal noise still exist. Multipath propagation errors play significant role in urban conditions (considering the background of open air visibility area that is significantly limited by buildings). These errors significantly differ in conditions of relatively insignificant traffic and movement of surrounding metal objects (e.g. car bodies etc.).

"Payment" for high accuracy is the necessity to resolve phase uncertainties which is a time consuming process (10 - 20 minutes in some cases) that goes against, for example, for assessment of the distance between motor vehicles that move towards each other.

The following approaches are applied for resolution of phase uncertainties:

- aprioristic assessment of coordinates;
- assessment of absolute coordinates using other-type navigation means;
- signal-wave envelope measurements (pseudorange measurements);
- second frequency channel measurements;
- excess due to combined assessment based on measurements using above six navigation satellites;
- use of ground pseudo-satellites.

Procedures based on the excess of phase measurements are the most effective, however, the possibilities of such approach are limited within urban conditions due to the fact that the greatest part of sky is screened by buildings.

Thus, the task for significant decrease of time required for resolution of phase uncertainty within urban conditions where number of radio-visible navigation satellites is limited by buildings and serious error connected with multipath propagation exists, is actual.

There are a lot of solutions on prevention of collisions based on satellite navigation systems like GPS, GLONASS, Galileo, Beidou, some of them are given below.

Technical solution described in the USA patent No. 6405132 published on 11.06.2002 is well known. The solution is based on high-accuracy determination of absolute coordinates of road users with application of satellite navigation system (SNS) with differential corrections of measurements from base station with accurate coordinates and map control stored in navigation hardware memory. Road users exchange their coordinates via radio channel thus allowing on-board computers to assess collision risks and form corresponding prevention and/or control signals. This solution also requires installation and maintenance of base stations thus representing serious disadvantage of such approach for sparsely populated areas and long-mileage roads. Moreover, multipath propagation of distribution of satellite navigation signals plays significant role as in the previous case within the conditions of dense urban construction and high density metal surfaces such as fences, facade and building roof elements, industrial structures, car bodies and etc. The multipath propagation may cause significant decrease of high-accuracy positioning in definite conditions relatively to base station positioned at a distance above tens-hundreds of meters. Accuracy obtained in this solution is substantially lower than the accuracy obtained in solutions with phase measurements.

Technical solution described in the USA patent No. 5325302 published on 28.06.1994 is well known. The solution is based on standard definition of absolute coordinates of road users with SNS. Road users exchange their coordinates via radio channel thus allowing on-board computers to assess collision risks and form corresponding prevention and/or control signals. Peculiarity of such solution is to store movement trajectory in memory with the consequent use in collision probability prediction algorithm. The disadvantage of the solution is low accuracy of assessments formed on the basis of standard measurements using SNS.

Technical solution that is the most close by its technical essence to the stated technical solution is the technical solution described in the patent of the USE No. 6275773 published on 14.08.2001. This solution is based on high-accuracy determination of absolute coordinates of road users with application of SNS with phase correction of measurements from base station with precisely known coordinates. Road users exchange their coordinates via radio channel thus allowing on-board computers to assess collision risks and form corresponding prevention and/or control signals. This solution requires installation and maintenance of base station thus representing serious disadvantage of such approach for sparsely populated areas and long-mileage roads. Moreover, multipath propagation of distribution of satellite navigation signals plays significant role as in the previous case within the conditions of dense urban construction and high density metal surfaces (fences, facade and building roof elements, industrial structures, car bodies and etc.). The multipath propagation may cause significant decrease of high-accuracy positioning in definite conditions relatively to base station positioned at a distance above tens-hundreds of meters.

## SUMMARY OF THE INVENTION

The task that is aimed for resolution by the stated technical solution is prevention of collision of mobile objects based on relative radio navigation, particularly, of motor cars, water and air vehicles and vessels both man-attended and automatic.

Technical result provided by the stated technical solution is concluded in the decrease of time for resolving the phase uncertainty thus leading to faster resolution of relative navigation task.

Assessment of navigation parameters vector represents initial conditions in known solutions. Difference of the stated technical solution from known solutions for phase uncertainty is the clarification of initial conditions: aprioristic assessment of relative position of approaching mobile object by preliminary summarization of relative positions vectors of mobile objects between each other assessed at high accuracy level by every mobile object up to the moment of resolution of the current relative navigation task. This is required to achieve the stated technical result aimed for decrease of time for resolution of phase uncertainty thus leading to faster resolution of relative navigation task.

The stated method for prevention of collisions based on relative radio navigation includes the following stages: satellite navigation systems navigation hardware (SNSNH) is installed in every mobile object, the hardware is capable to receive satellite navigation signals in coherent mode; assessment of extended navigation vector is formed at outlet of SNSNH; two-side channel for data exchange between mobile objects is organized; mobile objects transmit assessments of extended navigation vectors of neighboring mobile objects to each other; mobile object roughly assesses relatively to itself the position of neighboring mobile object and position of objects neighboring to it; every mobile object solves relative navigation task and forms precision assessment of relative position of neighboring mobile object; every mobile object activates the mode for tracking of relative position vector during which the extrapolation of relative position vector takes place to future to the time no less than the sum of the delay connected with driver's attention and assumed duration of maneuver; extrapolation assessment is added with the data on dimensions of mobile object; if minimum extrapolation distance between mobile objects composes less than the buffer distance then the warning of probability of collision is formed and/or automatic collision avoidance means are activated.

## BRIEF DESCRIPTION OF THE DRAWINGS

Features and advantages of the stated technical solution shall be evident based on the detailed description below and drawings attached, where:

Fig. 1 shows an example of mobile objects moving.
Fig. 2 shows error in resolving of absolute navigation task.
Fig. 3 shows transmission of assessment of extended navigation vector.
Fig. 4 shows precision assessment of mobile object relative position.

Fig. 5 shows data transfer from mobile object B by neighboring mobile objects A and C.
Fig. 6 shows movement of mobile objects in mutual position precision tracking mode.
Fig. 7 shows movement of the whole majority of mobile objects in mutual position tracking mode.

**DETAILED DESCRIPTION OF THE INVENTION**

The following technical components may be used for implementation of the method for prevention of collisions based on relative radio navigation between two and more mobile objects:

SNS receiver forms the following output data:

- assessment of standard navigation vector containing coordinates, speed vector and time;
- assessment of received carrier satellite radio navigation signals phases;
- time stamps corresponding to carrier phases assessment moments;
- standard system identifiers of corresponding navigation satellites.

Radio-frequency receiver-transmitter for organization two-sided radio channel for data transfer between mobile objects that may also transmit the following data:

- data obtained by means of SNS;
- data including information regarding own dimensions of every mobile object;
- data including information regarding unique identifier of every mobile object.

Digital computer that may be realized in the form of an on-board computer that shall also execute the following algorithms:

- algorithm of assessment of relative distance between a pair of road users on the basis of differences of assessments of received carrier satellite radio navigation signals phases;
- algorithms of prediction of possibility of collision based on previous and current assessments.
- algorithm of assessment of relative distance to mobile objects surrounding a pair of mobile objects on the basis of differences of assessments of received carrier satellite radio navigation signals phases;

Algorithms of assessment of relative coordinates are described in bibliography and are not new. Let's explain their working concept.
Satellite navigation systems GPS/GLONASS/Galileo/Beidou are related to those positional and tachometrical. Resolution of navigation task - the assessment of unknown coordinates of mobile object shall be performed using the method of lesser squares applicably to the system of equations relatively to measured pseudo-distances between mobile object and navigation satellites with known coordinates that should be at least 4 as in preferable variant of implementation of the stated technical solution. Pseudo-distances may be measured using the following two methods:

1. using tachometrical code pseudo-delay measurements: unequivocal measurements with an error up to 2-30 meters;
2. using measurements of high-frequency filling phase raids: measurements with an error less than 1 cm but with integral uncertainty aliquot to the wave length.

Errors of closely located SNSNH are highly correlated. Thus, relative distance between SNSNH may be assessed at high accuracy as difference of vectors of coordinates. Correlated constituents of error shall be compensated.
Basic difficulty of resolution of relative positioning task is concluded in resolution of phase uncertainties. The most commonly encountered methods for resolution of phase uncertainties are based on the excess of measurements when number of phase measurements is greater than the number of the unknown coordinates. It is especially actual for multi-system SNSNH and multi-frequency SNSNH.
Mathematically, the procedure of resolution of uncertainties is amounted to integral minimization of quadratic form:

$$L(\boldsymbol{p}) = (\boldsymbol{p} - \widehat{\boldsymbol{p}})^T \boldsymbol{W_p}^{-1} (\boldsymbol{p} - \widehat{\boldsymbol{p}}),$$

where $\boldsymbol{p}$ - preliminary assessment of integral shifts vector set on the multitude of positive real numbers; $\boldsymbol{p}$ - vector of

second differences of phase measurements of observed navigation radio signals with compensated common systematic errors that consist, mainly, of integral shifts and small remained non-compensated tracking error components; $W_p$ - dispersion matrix of integral shift vector.

Different algorithms may be used for resolution of the task. LAMBDA algorithm or its variations is the most propagated in practice.

Values of dispersion matrix components $W_p$ are significantly decreased upon narrowing of uncertainty resolution scope defined by the error of aprioristic assessments of mutual position of SNSHN between which the distance is measured. The lower the error of aprioristic assessment of relative position the narrower the scope of resolution of uncertainty. Decrease of values of dispersion matrix components leads to acceleration of resolution of uncertainties and acquisition of high-accuracy assessments.

The stated technical solution shortens the scope for resolution of uncertainty per one or two orders thus significantly accelerating the resolution of the task of high-accuracy relative positioning using phase measurements.

Means for prevention of probability of collision controlled by digital computer. The indicated means may be arranged in the form of sound and/or visual signal preventing collision probability.

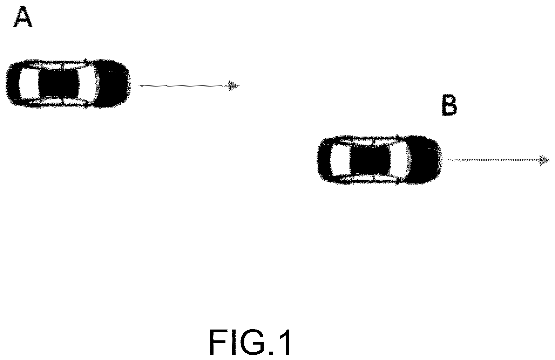

Collision prevention method based on relative radio navigation may be arranged in accordance with the example described below. There are mobile objects A and B (Fig. 1). These are motor cars in the given example but they may also be water vessels or aircrafts. The mobile objects move relatively to each other in aprioristically unknown manner. In some cases the mobile objects may be motionless.

Board of every mobile object shall have SNSHN navigation hardware installed that shall receive satellite navigation signal in coherent mode, i. e. with assessment of carrier phases.

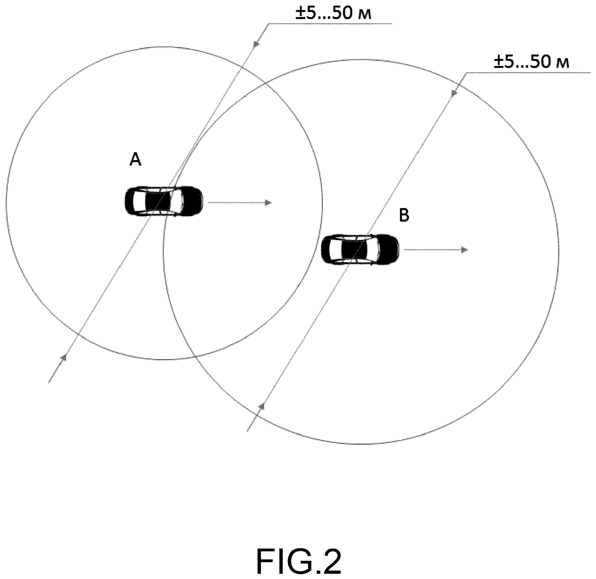

Every on-board SNSHN shall solve standard absolute navigation task. Accuracy of resolution of absolute navigation task within urban conditions shall compose approx. ±5...50 m (Fig. 2). Hereinafter, the assessments of errors shall be specified with the probability rate 95 %.

Assessment of extended navigation vector shall be formed at the outlet of on-board SNSHN. The assessment shall include:

a) standard navigation vector

- latitude;
- longitude;
- height;
- speed projection to north direction;
- speed projection to east direction;
- speed projection to vertical axis;
- system time;

b) extension:

- identifiers of satellites observed;
- phases of observed satellites carrier signals;
- time stamps to phase assessments;
- dimensions of road user and position of receiving antenna.

Two-sided radio channel for data transmission shall be arranged between mobile objects.

When mobile objects A and B approaches to the distance of radio channel action, they transmit assessments of their extended navigation vectors to each other.

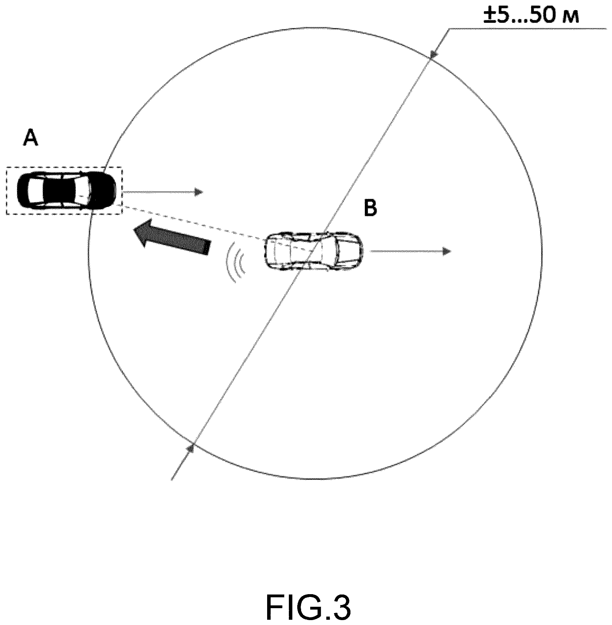

After receipt of navigation parameters vector assessment of mobile object B, the mobile object A roughly assesses position of mobile object B relatively to itself (Fig. 3).

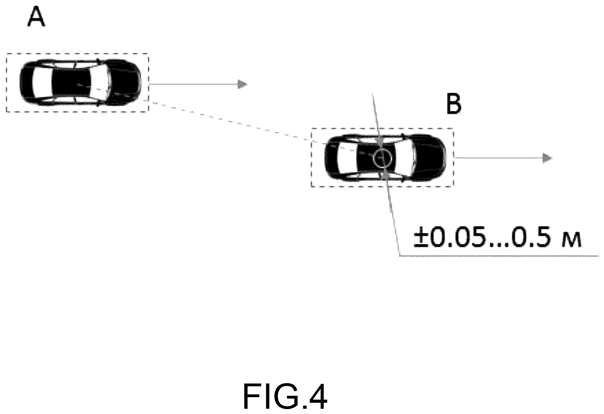

Rough assessment represents initial approaching for resolution of phase uncertainty and precision solution of relative navigation task that requires definite time that highly depends on satellite navigation signal local receiving capabilities. After resolution of relative navigation task, every mobile object shall form precision assessment of relative position of neighboring mobile object with an error approx. ±5...50 cm (Fig. 4). Basic constituent of error - the result of multipath propagation; the closer the mobile objects to each other the closer the multipath propagation conditions. Thus, the error of relative position vector assessment falls to centimeter lever upon approaching of mobile objects.

After resolution of uncertainty, the digital computer of each mobile object shall start tracking AB vector, this shall occur along with AB extrapolation to future to the time no less than the sum of driver's reaction delay and assumed duration of the maneuver: approx. 0.1-10 sec depending on the approaching speed. Extrapolation shall be performed using known filtration methods.

The following filtration method shall be applied to extrapolation in preferable variant of implementation of the stated solution.

Linear dynamics model (time variations) of coordinates of mobile object B relatively to mobile object A shall be applied. The model shall be formally recorded in the form of vector-matrix equation.

$$x(k) = Fx(k-1) + H\eta(k-1) + Gu(k-1),$$

where $k$ - time variable; $x$ - 9-dimensional vector of condition containing relative difference of latitudes, longitudes and lengths of mobile object coordinates as well as derivatives (projections of mutual speed of movement of mobile objects relatively to each other and vertical direction, correspondingly) and second derivatives (corresponding projections of derivatives to north, east and vertical directions); $F$ - square transitional matrix of order $9 \times 9$, describing own dynamics of road user (discrete representation of second order describing inertia of road user); $\eta$ - $l$-dimensional vector of discrete white Gaussian noises with dispersion matrix $Q(k)$, describing random constituent of motion model; $H$ - dimension connections matrix $9 \times l$; $u$ - $m$-dimensional vector of controlling influences, describing systematic constituent of motion law change known to digital computer (steering turn, pedal application and etc.); $G$ - dimension connections matrix $9 \times m$.

Model of mobile object A dynamics relatively to mobile object B is similar but it is applied with the opposite sign. Thus, the operation of algorithms on boards of a pair of mobile objects is completely similar. Mobile object A on-board computer algorithm operation is examined further.

Conditions vector $x(k)$ is linearly observed mixed with noise and $T\sim0.1..1$ sec depending on on-board SNSHN operating mode:

$$r(k) = Cx(k) + n(k),$$

where $r$ - 6-dimensional observed process (differences of coordinates and derivatives); $C$ - dimensions observation matrix $6 \times 9$; $n$ - 6-dimensional vector of discrete white Gaussian noises with dispersion matrix $N(k)$.

Observation $r(k)$ is transmitted to the input of the linear Calman filter described by the following system of recurrence equations:

$$\tilde{x}(k) = F\hat{x}(k-1) + Gu(k-1),$$

$$\tilde{M}(k) = F\hat{M}(k-1)F^T + HQ(k)H^T,$$

$$K(k) = \tilde{M}(k)C^T\big(C\tilde{M}(k)C^T + N(k)\big)^{-1},$$

$$\hat{x}(k) = \tilde{x}(k) + K(k)\big(r(k) - C\tilde{x}(k)\big),$$

$$\hat{M}(k) = \tilde{M}(k) - K(k)C\tilde{M}(k),$$

where $\tilde{x}$ - extrapolated by one time cycle $T$ assessment of conditions vector; $\hat{x}$ - adjusted assessment of conditions vector; $\tilde{M}$ - extrapolated assessment of error dispersion matrix; $\hat{M}$ - corrected assessment of error dispersion matrix; $K$ - weight coefficient matrix.

Current assessment of $\hat{R}$ distance $R$ between mobile objects shall be calculated as Euclidean norm of assessment of shortened 3-dimensional condition vector $\hat{x}'(k)$, containing only differences of coordinates and height of a pair of mobile objects normalized to dimensions in meters:

$$\hat{R}(k) = \|\hat{x}'(k)\|.$$

Assessment $\hat{R}$ shall be formed for current time with time cycle $T$. Besides of current assessment of distance

$\hat{R}$ the distance assessment $\tilde{\tilde{R}}$ is formed, extrapolated to future for the time of $T_{\ni} \sim 1 \ldots 10$ seconds - the time considering delay due to driver's reaction and inertia of mobile object formed with fast time cycle of $T_0 \sim 0.01 \ldots 0.1$ seconds, required for timely reaction within the conditions of greater dynamics of mutual motion:

$$\tilde{\tilde{R}}(i, k) = \left\| \left( \boldsymbol{F}_{|T_{\ni}} \tilde{\tilde{\boldsymbol{x}}}(i, k) \right)' \right\|,$$

$$\tilde{\tilde{\boldsymbol{x}}}(i, k) = \boldsymbol{F}_{|iT_0} \hat{\boldsymbol{x}}(k),$$

where ( )' - operation for decrease of conditions vector to the first three components (coordinates and height) and their normalization to dimensions [in meters]; $F_{|T_{\ni}}$ - transition matrix recorded relatively to extrapolation period $T_{\ni}$; $\boldsymbol{F}_{|iT_0}$ - transition matrix recorded relatively to the period $iT_0$; $i = 0, 1, 2 \ldots, (T/T_0 - 1)$ - time cycle variable.

Assessment of distance between road users $\tilde{\tilde{R}}$ extrapolated to future for $T_{\ni} \sim 1 \ldots 10$ seconds period of time formed with fast time cycle $T_0 \sim 0.001 \ldots 0.01$ seconds shall be used for revelation of collision threat.

Information regarding dimensions of mobile objects A and B shall be added to extrapolated assessment of AB vector in digital computer.

If minimum extrapolated distance between mobile objects A and B composes is less than buffer distance that composes approx. 0.2-2 m depending on mobile objects motion speeds, the digital computer shall transmit warning signal regarding probability of collision to collision probability prevention means.

Warning signal regarding probability of collision may be used to alarm driver (sound or visual alarm via on-board computer, on smartphone screen connected to on-board computer etc.) and/or to control automated and/or automatic collision prevention means, e.g. braking system.

Upon increase of distance between of the objects, the navigation task shall be ceased from resolution by the digital computer due to absence of probability of collision.

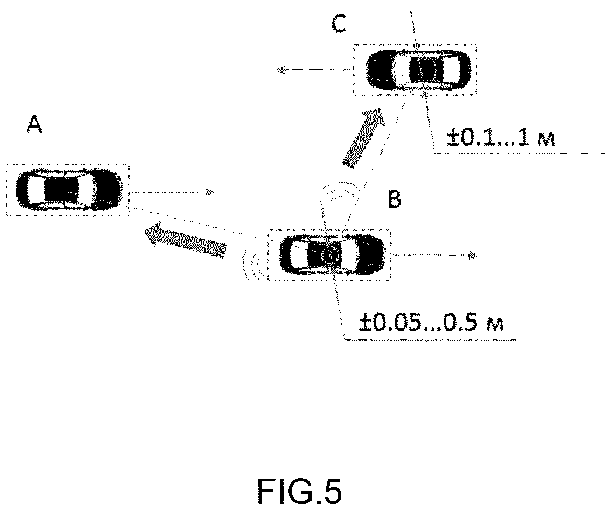

Mobile object C (Fig. 5) approaches from the side of mobile object B, then the navigation task between mobile objects B and C shall be resolved before the moment of resolution of the relative navigation task between mobile objects A and C. After that, the assessment of BC vector shall be obtained by mobile object B.

This assessment shall be transmitted via radio channel to mobile object A. After the transmission of extended navigation vector from mobile C to mobile object A, the digital computer of mobile object A shall start resolving relative navigation task to determine AC vector using initial approaching distance in the form of the sum of AB and BC vectors. In the result of such approaching, the aprioristic value of AC vector shall be assessed with an error approx. $\pm 0.1$-1 m, which is significantly accurate than standard aprioristic approaching for dynamic consumers (with error approx. $\pm 5$-50 m).

Similarly to this, the mobile object B transmits BA vector assessment to mobile object C, mobile object A transmits its assessment of navigation vector. Digital computer of mobile object C also quickly resolves relative navigation task on precision assessment of CA vector.

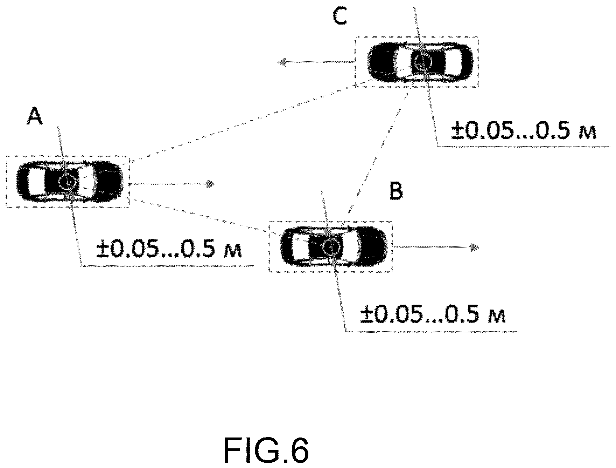

Significant narrowing of aprioristic uncertainty scope decreases time required for resolution of phase uncertainty and acquisition of precision assessment of AC vector. Thus, the resolution of relative navigation task between road users shall be arranged "on-the-fly" at a stage of approaching of a new mobile object in the radio channel operation range. To the moment of reaching, i. e. at the most dangerous stage from the point of view of probability of collision, the mobile objects A and C track mutual position with an error up to 5-10 cm considering own dimensions thus allowing in case of danger to timely predict possible collision and transmit the corresponding signal to collision probability prevention means. All other mobile objects (Fig. 6) also track mutual position with an error up to 5-10 cm.

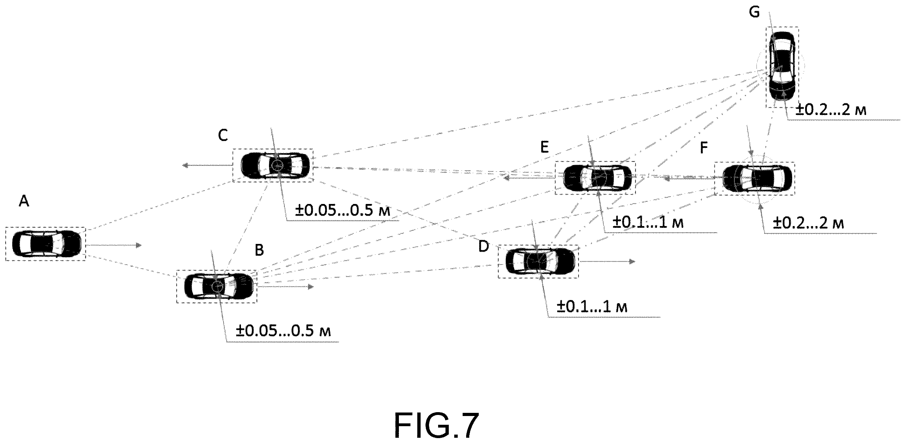

In case of the large number of mobile objects and radio channel distance, the data on mutual vectors shall be timely transmitted for all mobile objects (Fig. 7). As a result, every separate task for resolution of phase uncertainty shall be solved in the conditions of small aprioristic uncertainty (compare $\pm 0.2$-2 m with $\pm 5$-50 m) which shall take significantly lesser time than standard solution of the task for resolution of phase uncertainty. The exclusion is the resolution of the first phase uncertainty upon activated SNSNH at the moment of commencement of the motion.

The stated technical solution is industrially applicable since industrial manufactured and industrial applied resources are used for implementation of this solution.

Although the stated technical solution was described by specific implementation example, this description does not limit it but is presented only for demonstration and better understanding of the essence of the technical solution of the volume defined by the given formula.

**REFERENCES**

1. GLONASS. Design and functioning concepts/ Under revision of A. I. Perov, V. N. Kharisov. Pub. 4, revised and complemented. - M.: Radiotechnics, 2010;

2. High-accuracy positioning hardware using signals of global navigation satellite systems: receivers-consumers of navigation data. / Under revision of M. I. Zhodzishskiy. - M.: Publishing house MAI-Print, 2010;

3. Aviation radio navigation devices and systems. Under revision of M. S. Yarlykov. Guide-book for Airforce Institutions of Higher Education. Publication of Airforce Engineering Academy named after N. E. Zhukovskiy, 1980;

4. Paul de Jonge, Christian Tiberius. The LAMBDA method for integer ambiguity estimation: implementation aspects. Publications of the Delft Geodetic Computing Centre, No 12, 1996;

5. Information technologies in radiotechnical systems. Under revision of I. B. Fedorov. Training manual. Pub. 3, revised and complemented - M.: Publishing house of Moscow State Technical University named after N. E. Bauman, 2011;

6. A. I. Perov Static theory of radio technical systems - M.: Radiotechnics, 2003;

7. V. I. Tikhonov, V. N. Kharisov Static analysis and synthesis of radiotechnical devices and systems. Training manual for institutions of higher education. - M. Radio and communication, 2004;

8. M. S. Yarlykov. Static theory of radio navigation. - M.: Radio and communication, 1985;

9. L. V. Berezin, V. A. Veytsel Theory and designing of radio systems. Under revision of V. N. Tipugin. Training manual for institutions of higher education. - M.: "Soviet radio", 1977.

**Claims**

1.  A collisions avoidance method based on relative navigation, which includes the steps in which:

    - install on each mobile object the consumer's navigation receiver of global navigation satellite systems (GNSS), made with the ability to receive satellite navigation signals in coherent mode (that is, with the assessment of the phases of the carriers);
    - generate, at the receiver's output, an estimate of the extended state vector, which includes coordinates, velocity vector, time, carrier phase estimates of received satellite radio navigation signals, time stamps corresponding to the moments of carrier phase estimates, standard system identifiers of the corresponding navigation satellites;
    - organize a communication radio channel between mobile objects;
    - when moving objects approach each other at a working distance of the communication radio channel, moving objects transmit to each other estimates of their extended navigation vectors and estimates of the extended navigation vectors of neighboring moving objects;
    - based on the accepted estimates of the expanded navigation vector, the moving object roughly estimates itself, the positions of the neighboring moving objects;
    - each moving object solves the relative navigation problem in the coherent mode (that is, with the resolution of phase ambiguity) and forms a precise estimate of the relative position of the neighboring mobile object;
    - each moving object includes the vector tracking mode of the relative position, at which the vector of the relative position is extrapolated to the future for a time not less than the sum of the delay time of the driver's reaction and the expected duration of the maneuver;
    - add information about the dimensions of the moving object to the extrapolated estimate of the vector of relative position;
    - if the minimum extrapolated distance between moving objects is less than the buffer distance, a collision warning signal is generated and / or automatic collision avoidance tools are activated.

FIG.1

±5...50 м

±5...50 м

A

B

# FIG.2

±5...50 м

A

B

# FIG.3

±0.05...0.5 м

FIG.4

FIG.5

C

A

±0.05...0.5 м

B

±0.05...0.5 м

±0.05...0.5 м

FIG.6

G

±0.2...2 м

C

±0.05...0.5 м

A

E

F

±0.1...1 м

±0.2...2 м

B

D

±0.1...1 м

±0.05...0.5 м

FIG.7

**INTERNATIONAL SEARCH REPORT**

| International application No. |
| --- |
| PCT/RU 2016/000649 |

| A. CLASSIFICATION OF SUBJECT MATTER |
| --- |
| G08G 1/16 (2006.01); G01S 19/38 (2010.01) |
| According to International Patent Classification (IPC) or to both national classification and IPC |

| B. FIELDS SEARCHED |
| --- |
| Minimum documentation searched (classification system followed by classification symbols) |
| G08G 7/00-7/02, G08G 1/00-1/16, G01S 13/93, 19/00-19/51 |
| Documentation searched other than minimum documentation to the extent that such documents are included in the fields searched |
| Electronic data base consulted during the international search (name of data base and, where practicable, search terms used) |
| PatSearch (RUPTO internal), USPTO, PAJ, Esp@cenet, DWPI, EAPATIS, PATENTSCOPE |

| C. DOCUMENTS CONSIDERED TO BE RELEVANT | | |
| --- | --- | --- |
| Category* | Citation of document, with indication, where appropriate, of the relevant passages | Relevant to claim No. |
| Y | RU 2134911 C1 (LETNO-ISSLEDOVATELSKY INSTITUT IM. M. M. GROMOVA) 20.08.1999, p. 5, right-hand column, line 14-p. 6, right-hand column, line 10, p. 7, right-hand column, lines 39-53, p. 8, left-hand column, line 23-p. 14, left-hand column, line 3 | 1 |
| Y | Sistema TCAS. Preduprezhdenie stolkonoveny samoletov v vozdukhe [on-line] 24 June 2012 [retrieved on 2017-06-08]. Found from Internet: <URL: http://avia-simply.ru/sistema-tcas/>, p. 18, "Rezhim raboty" | 1 |
| A | US 8145365 B2 (THALES) 27.03.2012 | 1 |

| ☐ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 06 June 2017 (06.06.2017) | 29 June 2017 (29.06.2017) |
| Name and mailing address of the ISA/ RU | Authorized officer |
| Facsimile No. | Telephone No. |

Form PCT/ISA/210 (second sheet) (April 2005)

# EP 3 518 210 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6405132 A
- US 5325302 A

- US 6275773 B

### Non-patent literature cited in the description

- **A. I. PEROV ; V. N. KHARISOV.** GLONASS. Design and functioning concepts/ Under revision. *revised and complemented. - M.: Radiotechnics,* 2010
- High-accuracy positioning hardware using signals of global navigation satellite systems: receivers-consumers of navigation data. **M. I. ZHODZISHSKIY. - M.** Under revision. Publishing house MAI-Print, 2010
- Aviation radio navigation devices and systems. Under revision of M. S. Yarlykov. **N. E. ZHUKOVSKIY.** Guide-book for Airforce Institutions of Higher Education. Airforce Engineering Academy, 1980
- **PAUL DE JONGE ; CHRISTIAN TIBERIUS.** The LAMBDA method for integer ambiguity estimation: implementation aspects. Delft Geodetic Computing Centre, 1996

- Information technologies in radiotechnical systems. **I. B. FEDOROV.** Training manual. Pub. 3, revised and complemented - M. Publishing house of Moscow State Technical University, 2011
- **A. I. PEROV.** Static theory of radio technical systems - M. *Radiotechnics,* 2003
- **V. I. TIKHONOV ; V. N. KHARISOV.** Static analysis and synthesis of radiotechnical devices and systems. Training manual for institutions of higher education. *M. Radio and communication,* 2004
- **M. S. YARLYKOV.** Static theory of radio navigation. - M. *Radio and communication,* 1985
- **L. V. BEREZIN ; V. A. VEYTSEL.** Theory and designing of radio systems. Under revision of V. N. Tipugin. Training manual for institutions of higher education. - M. *Soviet radio,* 1977